# DEMANDE DE BREVET EUROPEEN

(11) **EP 1 375 894 A1**
(43) Date de publication de la demande: **02.01.2004**
(21) Numéro de dépôt: 03291270.1
(22) Date de dépôt: 27.05.2003
(51) Int. Cl.: F02M 31/10, F02M 37/00

(54) **Module pour la régulation thermique de carburant destiné à un moteur thermique de véhicule automobile et dispositif d'alimentation en carburant muni de ce module**

(30) Priorité: 19.06.2002 FR 0207577
(71) Demandeur: Peugeot Citroen Automobiles S.A., 92200 Neuilly-Sur-Seine (FR)
(72) Inventeur: Piet, Patrick, 92800 Puteaux (FR); Tomaselli, Ludovic, 92400 Courbevoie (FR)
(74) Mandataire: de la Bigne, Guillaume Michel Marie

(57) **Abrégé**

Ce module comprend deux entrées de carburant appelées entrées de module froide (38) et chaude (40), une sortie de carburant appelée sortie de module (41), des moyens (42) de filtration de carburant munis d'une entrée de carburant (44) raccordée à l'entrée de module froide (38) et d'une sortie de carburant (46) raccordée à la sortie de module (41), des moyens de refroidissement de carburant comprenant un échangeur thermique (48) carburant/fluide réfrigérant, des moyens (52) de raccordement de l'entrée de module chaude (40) à une entrée de carburant (50) de l'échangeur thermique (48), et des moyens (54) de raccordement d'une sortie de carburant (56) de l'échangeur thermique (48) à une entrée de carburant (44) des moyens de filtration (42). Le fluide réfrigérant est par exemple un liquide caloporteur circulant dans un circuit de refroidissement du moteur, notamment un circuit de refroidissement basse température (32).

## Description

La présente invention concerne un module pour la régulation thermique de carburant destiné à un moteur thermique de véhicule automobile et un dispositif d'alimentation en carburant muni de ce module.

On connaît déjà dans l'état de la technique, notamment d'après EP-A-0 304 742, un module pour la régulation thermique de carburant destiné à un moteur thermique de véhicule automobile, du type comprenant :
- deux entrées de carburant appelées entrées de module froide et chaude,
- une sortie de carburant appelée sortie de module,
- des moyens de filtration de carburant munis d'au moins une entrée de carburant raccordée à l'entrée de module froide et d'une sortie de carburant raccordée à la sortie de module,
- des moyens de refroidissement de carburant comprenant un échangeur thermique carburant/fluide réfrigérant, et
- des moyens de raccordement de l'entrée de module chaude à une entrée de carburant de l'échangeur.
   Dans EP-A-0 304 742, le moteur thermique est du type Diesel à injection.
Il est connu d'alimenter en carburant un moteur thermique du type Diesel à injection au moyen d'un dispositif comprenant :
- une rampe d'injection de carburant, commune à plusieurs injecteurs,
- un pompe d'alimentation de carburant, notamment du type à haute ou très haute pression, refoulant le carburant vers la rampe d'injection, et
- des moyens formant collecteur de retour de carburant provenant de la pompe ou de la rampe d'injection.

Dans EP-A-0 304 742, la sortie de module est raccordée à l'aspiration de la pompe. Les moyens formant collecteur de retour de carburant sont raccordés à l'entrée chaude de module.

Dans le cas d'un moteur à injection, la température du carburant recyclé dans le collecteur de retour de carburant est généralement très élevée. On souhaite habituellement que la température du carburant recyclé via le collecteur de retour ne dépasse pas environ 110°C. On souhaite également que la température du carburant dans le réservoir ne dépasse pas 80°C. Il en est de même pour la température du carburant à l'aspiration de la pompe haute ou très haute pression.

Pour tenir compte de ces contraintes, dans EP-A-0 304 742, le carburant recyclé est refroidi par les moyens de refroidissement raccordés au collecteur de retour par l'intermédiaire de l'entrée chaude du module. Ces moyens de refroidissement comprennent une échangeur thermique carburant/air dont la sortie de carburant est raccordée au réservoir. Selon l'enseignement de EP-A-0 304 742, il est donc nécessaire de prévoir des moyens d'acheminement du carburant sortant de l'échangeur thermique carburant/air vers le réservoir.

On observe cependant, dans certaines conditions de fonctionnement du moteur thermique, que, malgré la présence des moyens de refroidissement raccordés au collecteur de retour, la température du carburant recyclé renvoyé dans le réservoir est supérieure à la température maximale généralement admise à l'aspiration de la pompe d'alimentation de carburant.

Par ailleurs, EP-A-0 304 742 enseigne, pour le bon fonctionnement du dispositif d'alimentation de carburant en saison froide (température extérieure du véhicule relativement basse, par exemple comprise entre -40 et -30°C), de réchauffer le carburant circulant dans les moyens de filtration à l'aide de carburant provenant de la pompe.

L'invention a pour but de proposer un module pour la régulation thermique de carburant (refroidissement du carburant circulant dans le collecteur de retour, chauffage du carburant circulant dans les moyens de filtration) dont la structure soit optimisée de façon notamment à pouvoir regrouper les moyens de régulation dans un ensemble pré-assemblé, le fonctionnement de ce module étant par ailleurs facile à automatiser.

A cet effet, l'invention a pour objet un module pour la régulation thermique de carburant destiné à un moteur thermique de véhicule automobile, du type précité,
**caractérisé en ce qu**'il comprend des moyens de raccordement d'une sortie de carburant de l'échangeur thermique à une entrée de carburant des moyens de filtration.

Suivant des caractéristiques de différents modes de réalisation de ce module :
- le fluide réfrigérant est choisi parmi :
   ■ un liquide caloporteur circulant dans un circuit de refroidissement du moteur, notamment un circuit de refroidissement basse température,
   ■ un liquide caloporteur refroidi par une pompe à chaleur destinée notamment à la climatisation d'un habitacle du véhicule et
   ■ un fluide frigorigène de pompe à chaleur ;
- les moyens de raccordement de l'entrée de module chaude à l'entrée de carburant de l'échangeur thermique assurent un raccordement permanent entre l'entrée de module chaude et l'entrée de carburant de l'échangeur thermique ;
- le module comprend des moyens de raccordement de l'échangeur thermique à un circuit de fluide réfrigérant comprenant une vanne de fluide réfrigérant susceptible d'adopter au moins deux états respectivement de raccordement de l'échangeur thermique et du circuit de fluide réfrigérant entre eux et d'isolation de l'échangeur thermique vis à vis du circuit de fluide réfrigérant ;
- les moyens de raccordement de l'entrée de module chaude à l'entrée de carburant de l'échangeur thermique comprennent une vanne de carburant susceptible d'adopter au moins deux états de raccordement de l'entrée de module chaude à, sélectivement, l'entrée de carburant de l'échangeur thermique et des moyens de dérivation de cet échangeur thermique ;
- la vanne est pilotée en fonction d'au moins un paramètre choisi parmi :
   ■ des paramètres thermiques tels que la température du carburant relevée de préférence en amont ou en aval des moyens de filtration, la température du fluide réfrigérant, la température extérieure au véhicule, et
   ■ des paramètres caractérisant le fonctionnement du moteur tels que le régime du moteur, la charge du moteur, la pression du carburant dans une rampe d'injection disposée en aval de la sortie de module ;
- la vanne de carburant est pilotée en fonction d'au moins un paramètre choisi parmi des paramètres thermiques comprenant également la température du carburant relevée en amont de la vanne de carburant ;
- l'entrée de module froide et la sortie de carburant de l'échangeur thermique sont raccordées à une même entrée de carburant des moyens de filtration ;
- le module forme un ensemble pré-assemblé destiné à être monté dans un dispositif d'alimentation en carburant d'un moteur thermique de véhicule automobile.

L'invention a également pour objet un dispositif d'alimentation en carburant d'un moteur thermique de véhicule automobile du type à injection de carburant, ce dispositif comprenant :
- un réservoir de carburant,
- une rampe d'injection de carburant,
- un pompe d'alimentation de carburant refoulant le carburant vers la rampe d'injection, et
- des moyens formant collecteur de retour de carburant provenant de la pompe ou de la rampe d'injection,
**caractérisé en ce qu**'il comprend un module tel que défini ci-dessus, le réservoir étant raccordé à l'entrée de module froide, les moyens formant collecteur de retour de carburant étant raccordés à l'entrée de module chaude et la sortie de module étant raccordée à l'aspiration de la pompe.

Suivant une autre caractéristique de ce dispositif d'alimentation en carburant, le moteur est de type Diesel.

L'invention sera mieux comprise à la lecture de la description qui va suivre, donnée uniquement à titre d'exemple et faite en se référant aux dessins dans lesquels :
- les figure 1 et 2 sont des vues schématiques d'un dispositif d'alimentation en carburant d'un moteur thermique de véhicule automobile, ce dispositif comprenant un module pour la régulation thermique du carburant, selon un premier mode de réalisation de l'invention, dans deux configurations de fonctionnement respectivement ;
- les figure 3 et 4 sont des vues similaires aux figures 1 et 2 représentant un module pour la régulation thermique de carburant, selon un second mode de réalisation de l'invention, dans deux configurations de fonctionnement respectivement.

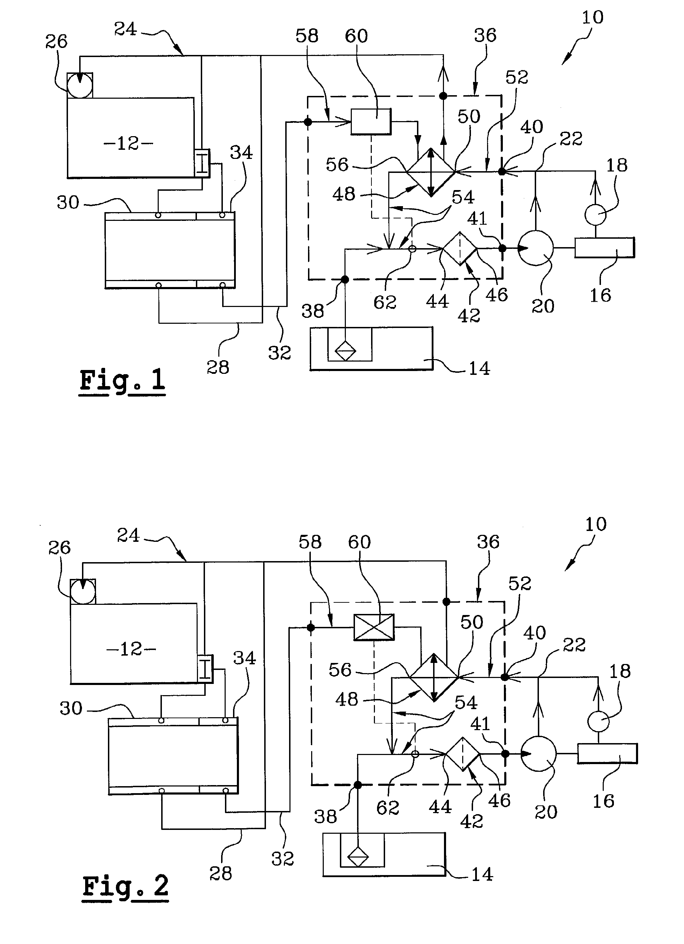

On a représenté sur les figures 1 et 2 un dispositif 10 d'alimentation en carburant d'un moteur thermique à injection 12 de véhicule automobile.

Dans l'exemple illustré, le moteur 12 est de type Diesel.

Le dispositif 10 selon l'invention comprend, de façon classique, un réservoir 14 de carburant, une rampe 16 d'injection de carburant, commune à plusieurs injecteurs 18, une pompe 20 d'alimentation de carburant refoulant le carburant vers la rampe d'injection 16, et des moyens 22 formant un collecteur de retour de carburant provenant de la pompe 20 ou de la rampe d'injection 18.

On notera que la pompe 20 est de type à haute pression ou très haute pression.

On a également représenté sur les figures 1 et 2 un circuit 24 de refroidissement du moteur 12 dans lequel circule un liquide caloporteur classique comprenant, par exemple, un mélange d'eau et d'antigel.

Le liquide caloporteur est entraîné dans le circuit de refroidissement 24 au moyen d'une pompe classique 26.

Le circuit de refroidissement 24 comprend une première branche 28 traversant un premier échangeur thermique 30 liquide caloporteur/fluide réfrigérant, et une seconde branche 32 traversant un second échangeur thermique 34 liquide caloporteur/fluide réfrigérant basse température. Cette seconde branche 32 sera appelée par la suite « branche basse température 32 ».

Le fluide réfrigérant en échange thermique avec le liquide caloporteur circulant dans le premier échangeur 30 est par exemple de l'air. Le fluide réfrigérant basse température en échangé thermique avec le liquide caloporteur dans le second échangeur 34 est par exemple un fluide frigorigène de pompe à chaleur, de type classique, tel qu'un dérivé chloré et fluoré du méthane ou de l'éthane (Fréon), de l'ammoniac, du dioxyde de carbone, etc.

Le dispositif 10 représenté sur les figures 1 et 2 comprend un module, selon un premier mode de réalisation de l'invention, pour la régulation thermique du carburant alimentant le moteur 12. Ce module, désigné par la référence 36, est délimité sur les figures 1 et 2 par un trait interrompu.

Le module 36 comprend une première entrée de carburant, appelée entrée de module froide 38. Le réservoir 14 est raccordé à cette entrée froide 38 à l'aide de moyens classiques.

Le module 36 comprend également une seconde entrée de carburant, appelée entrée de module chaude 40. Le collecteur 22 de retour de carburant est raccordé à cette entrée chaude 40 à l'aide de moyens classiques.

Le module 36 comprend encore une sortie de carburant, appelée sortie de module 41, raccordée à l'aspiration de la pompe 20.

Des moyens classiques 42 de filtration de carburant sont intégrés dans module 36. Ces moyens 42 sont munis d'une entrée de carburant 44, raccordée à l'entrée froide 38, et d'une sortie de carburant 46, raccordée à la sortie de module 41.

Des moyens de refroidissement de carburant sont également intégrés dans module 36. Ces moyens de refroidissement comprennent un échangeur thermique 48 carburant/fluide réfrigérant. L'entrée de module chaude 40 est raccordée à une entrée de carburant 50 de l'échangeur 48 à l'aide de moyens 52.

Dans le module 36 selon le premier mode de réalisation de l'invention, les moyens de raccordement 52, comprenant par exemple un conduit classique, assurent un raccordement permanent entre l'entrée chaude 40 et l'entrée de carburant 50 de l'échangeur 48.

Conformément à l'invention, le module 36 comprend des moyens 54 de raccordement d'une sortie de carburant 56 de l'échangeur 48 à l'entrée de carburant 44 des moyens de filtration 42.

Dans le mode de réalisation illustré sur les figures 1 et 2, le fluide réfrigérant en échange thermique avec le carburant dans l'échangeur 48 est le liquide caloporteur circulant dans la branche basse température 32 du circuit de refroidissement du moteur 12.

En effet, le module 36 selon le premier mode de réalisation de l'invention, comprend des moyens 58 de raccordement de l'échangeur thermique 48 à la branche basse température 32 du circuit de refroidissement 24. Ces moyens de raccordement 58 comprennent une vanne 60 de liquide caloporteur susceptible d'adopter au moins deux états respectivement, un état ouvert de raccordement de l'échangeur thermique 48 et de la branche basse température 32 entre eux et un état fermé d'isolation de l'échangeur thermique 48 vis-à-vis de cette branche basse température 32.

De préférence, la vanne 60 de liquide caloporteur est pilotée en fonction d'au moins un paramètre choisi parmi :
- des paramètres thermiques tels que la température du carburant relevée en amont ou en aval des moyens de filtration 42, la température du liquide caloporteur circulant dans la branche basse température 32, la température extérieure au véhicule, etc., et
- des paramètres caractérisant le fonctionnement du moteur 12 tels que le régime du moteur 12, la charge du moteur 12, la pression du carburant dans la rampe d'injection 16, etc.

Dans l'exemple illustré sur les figures 1 et 2, la vanne 60 est thermostatée de façon à être pilotée en fonction de la température du carburant relevée en amont des moyens de filtration 42, par exemple au moyen d'un capteur 62 agencé dans le module 36, plus particulièrement dans les moyens 54 de raccordement de la sortie de carburant 56 de l'échangeur à l'entrée de carburant 44 des moyens de filtration 42.

On notera que le liquide caloporteur de la branche 32 basse température assure un refroidissement efficace du carburant traversant l'échangeur 48.

En variante, le fluide réfrigérant circulant dans l'échangeur 48 pourrait être le liquide caloporteur circulant dans la première branche 28 du circuit de refroidissement. Le fluide réfrigérant pourrait être également choisi parmi un liquide caloporteur refroidi par une pompe à chaleur destinée notamment à la climatisation d'un habitacle du véhicule, et un fluide frigorigène de pompe à chaleur équipant le véhicule.

On notera que l'entrée de module froide 38 et la sortie de carburant 56 de l'échangeur 48 sont raccordées à la même entrée de carburant 44 des moyens de filtration 42.

De préférence, le module 36 forme un ensemble pré-assemblé destiné à être monté dans le dispositif 10 d'alimentation de carburant.

Sur la figure 1, on a représenté le dispositif 10 d'alimentation en carburant dans une configuration adaptée pour refroidir le carburant recyclé par le collecteur de retour 22.

En effet, la vanne de liquide caloporteur 60 est dans son état ouvert permettant la circulation dans l'échangeur 48 du liquide caloporteur provenant de la branche basse température 32. L'efficacité du refroidissement du carburant recyclé par le liquide caloporteur permet d'abaisser la température de ce carburant recyclé à une valeur compatible avec la température du carburant du réservoir 14, généralement inférieure à 80°C.

Sur la figure 2, on a représenté le dispositif 10 d'alimentation en carburant dans une configuration adaptée pour réchauffer le carburant traversant les moyens de filtration 42. Cette configuration est appropriée lors du démarrage du véhicule en saison froide.

En effet, la vanne de liquide caloporteur 60 est dans son état fermé isolant l'échangeur 48 de la branche 32 de liquide caloporteur.

Le carburant recyclé provenant de l'entrée de module 40, relativement chaud, se mélange, à l'entrée des moyens de filtration 42, avec le carburant provenant du réservoir 14, relativement froid, de façon que le carburant atteigne une température suffisante à l'aspiration de la pompe 20.

Ainsi, dans les deux configurations illustrées sur les figures 1 et 2, le carburant recyclé traverse l'échangeur 48. Toutefois, la circulation du liquide caloporteur dans l'échangeur 48 est pilotée par la vanne 60. Le pilotage de la vanne 60 peut être facilement automatisé et géré par une unité de commande comparant la température relevée par le capteur 62 à une valeur de référence prédéterminée au-dessus de laquelle la vanne 60 est automatiquement ouverte de façon à autoriser la circulation de liquide caloporteur dans l'échangeur 48.

Si, en variante, la vanne 60 est pilotée par des paramètres caractérisant le fonctionnement du moteur, tels que ceux évoqués plus haut, l'unité de commande de la vanne 60 pourra être constituée par le calculateur qui est destiné classiquement à la gestion de l'injection du carburant dans le moteur 12.

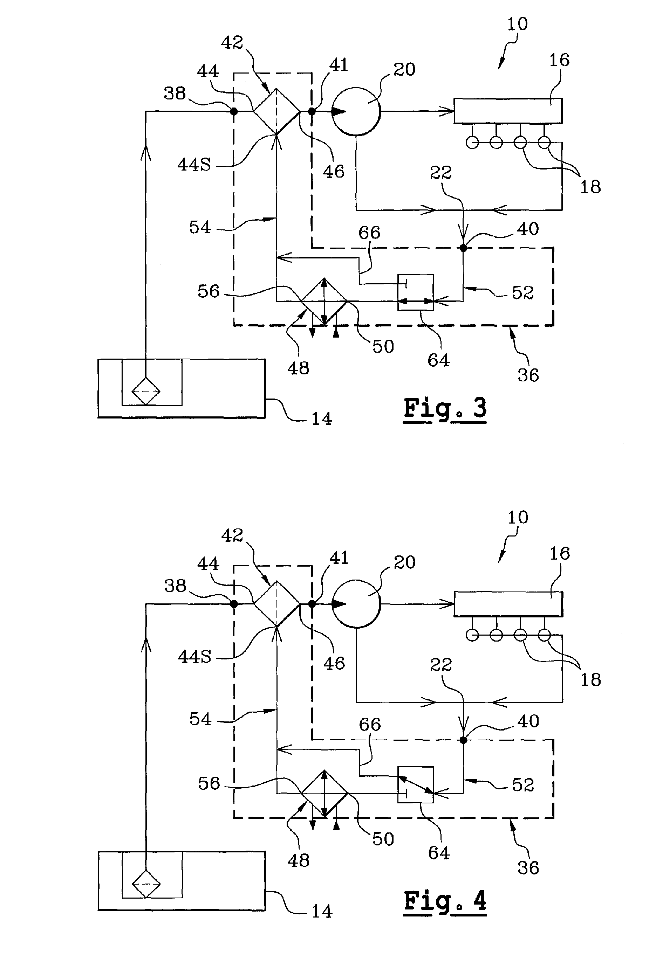

Sur les figures 3 et 4, on a représenté un dispositif 10 d'alimentation en carburant comportant un module 36 de régulation thermique de carburant selon un second mode de réalisation de l'invention. Sur ces figures 3 et 4, les éléments analogues à ceux des figures 1 et 2 sont désignés par des références identiques. Toutefois, on notera que sur les figures 3 et 4, le moteur 12 et le circuit 24 de refroidissement de ce moteur ne sont pas représentés.

Dans ce cas, la sortie de carburant 56 de l'échangeur 48 est raccordée à une entrée supplémentaire de carburant 44S des moyens de filtration 42.

Par ailleurs, les moyens 52 de raccordement de l'entrée de module chaude 40 à l'entrée de carburant 50 de l'échangeur 48 comprennent une vanne de carburant 64 susceptible d'adopter au moins deux états, à savoir un premier état de raccordement de l'entrée de module chaude 40 à l'entrée de carburant 50 de l'échangeur 48 et un second état de raccordement de l'entrée de module chaude 40 à des moyens 66 de dérivation de l'échangeur 48. Les moyens de dérivation 66 sont destinés à raccorder l'entrée de module chaude 40 à l'entrée supplémentaire 44S des moyens de filtration 42, sans passer par l'échangeur 48.

La vanne de carburant 64 peut être pilotée en fonction d'au moins un paramètre choisi parmi les paramètres thermiques et les paramètres caractérisant le fonctionnement du moteur évoqués dans la description ci-dessus du module 36 selon le premier mode de réalisation de l'invention. Les paramètres thermiques peuvent comprendre également la température du carburant relevée en amont de la vanne de carburant 64, par exemple au moyen d'un capteur (non représenté) placé dans le module 36, plus particulièrement dans la partie des moyens de raccordement 52 située entre l'entrée de module chaude 40 et la vanne de carburant 64.

Le fluide réfrigérant destiné à refroidir le carburant circulant dans l'échangeur 48 est choisi, de façon analogue au premier mode de réalisation du module 36 décrit ci-dessus, parmi :
- un liquide caloporteur circulant dans un circuit de refroidissement du moteur, notamment un circuit de refroidissement basse température,
- un liquide caloporteur refroidi par une pompe à chaleur destinée notamment à la climatisation d'un habitacle du véhicule, et
- un fluide frigorigène de pompe à chaleur équipant le véhicule.

Sur la figure 3, on a représenté le dispositif 10 d'alimentation de carburant dans une configuration adaptée pour refroidir le carburant recyclé par le collecteur de retour 22.

En effet, la vanne de carburant 64 est dans son premier état de raccordement de l'entrée de module chaude 40 à l'entrée de carburant 50 de l'échangeur 48.

Sur la figure 4, on a représenté le dispositif 10 d'alimentation en carburant 10 dans une configuration adaptée pour réchauffer le carburant circulant dans les moyens de filtration 42. Cette configuration est appropriée lors du démarrage du véhicule en saison froide.

En effet, la vanne de carburant 64 est dans son second état de raccordement de l'entrée de module chaude 40 aux moyens de dérivation 66.

Le carburant recyclé provenant de l'entrée de module 40, relativement chaud, se mélange, dans les moyens de filtration 42, avec le carburant provenant du réservoir 14, relativement froid, de façon que le carburant atteigne une température suffisante à l'aspiration de la pompe 20.

On notera que dans les deux configurations du dispositif 10 représentées respectivement sur les figures 3 et 4, le fluide réfrigérant est susceptible de circuler en permanence dans l'échangeur 48, la vanne 64 autorisant ou interdisant, selon le cas, le passage du carburant recyclé à travers l'échangeur 48.

Parmi les avantages de l'invention, on notera que celle-ci permet de s'affranchir de tout moyen de raccordement de la sortie 56 de l'échangeur 48 vers le réservoir 14. De ce fait, la structure du module 36 est optimisée de façon notamment à pouvoir regrouper les moyens de régulation de la température du carburant dans un ensemble pré-assemblé.

Par ailleurs, le changement de configuration de fonctionnement du dispositif d'alimentation de carburant 10 selon l'invention peut être réalisé automatiquement par pilotage automatique d'une vanne de fluide réfrigérant ou d'une vanne de carburant.

Le cas échéant, des moyens de dégazage permettant d'évacuer partiellement, voire complètement, l'air circulant dans le dispositif 10 (notamment à la suite d'une opération d'entretien ou de maintenance de ce dispositif 10) peuvent être facilement intégrés dans les moyens de filtration 42.

Le recours à un fluide réfrigérant tel qu'un liquide caloporteur ou un fluide frigorigène de pompe à chaleur permet un refroidissement efficace du carburant recyclé tout en limitant les dimensions de l'échangeur thermique 48.

## Revendications

1. Module pour la régulation thermique de carburant destiné à un moteur thermique de véhicule automobile, du type comprenant :
- deux entrées de carburant appelées entrées de module froide (38) et chaude (40),
- une sortie de carburant appelée sortie de module (41),
- des moyens (42) de filtration de carburant munis d'au moins une entrée de carburant (44 ; 44S) raccordée à l'entrée de module froide (38) et d'une sortie de carburant (46) raccordée à la sortie de module (41),
- des moyens de refroidissement de carburant comprenant un échangeur thermique (48) carburant/fluide réfrigérant, et
- des moyens (52) de raccordement de l'entrée de module chaude (40) à une entrée de carburant (50) de l'échangeur thermique (48),
**caractérisé en ce qu'**il comprend des moyens (54) de raccordement d'une sortie de carburant (56) de l'échangeur thermique (48) à une entrée de carburant (44 ; 44S) des moyens de filtration (42).

2. Module selon la revendication 1, **caractérisé en ce que** le fluide réfrigérant est choisi parmi :
- un liquide caloporteur circulant dans un circuit de refroidissement du moteur, notamment un circuit de refroidissement basse température (32),
- un liquide caloporteur refroidi par une pompe à chaleur destinée notamment à la climatisation d'un habitacle du véhicule et
- un fluide frigorigène de pompe à chaleur.

3. Module selon la revendication 1 ou 2, **caractérisé en ce que** les moyens (52) de raccordement de l'entrée de module chaude (40) à l'entrée de carburant de l'échangeur thermique (48) assurent un raccordement permanent entre l'entrée de module chaude (40) et l'entrée de carburant (50) de l'échangeur thermique (48).

4. Module selon la revendication 3, **caractérisé en ce qu'**il comprend des moyens (58) de raccordement de l'échangeur thermique (48) à un circuit (32) de fluide réfrigérant comprenant une vanne de fluide réfrigérant (60) susceptible d'adopter au moins deux états respectivement de raccordement de l'échangeur thermique (48) et du circuit (32) de fluide réfrigérant entre eux et d'isolation de l'échangeur thermique (48) vis à vis du circuit (32) de fluide réfrigérant.

5. Module selon la revendication 1 ou 2, **caractérisé en ce que** les moyens (52) de raccordement de l'entrée de module chaude (40) à l'entrée de carburant (50) de l'échangeur thermique (48) comprennent une vanne de carburant (64) susceptible d'adopter au moins deux états de raccordement de l'entrée de module chaude (40) à, sélectivement, l'entrée de carburant (50) de l'échangeur thermique (48) et des moyens (66) de dérivation de cet échangeur thermique (48).

6. Module selon la revendication 4 ou 5, **caractérisé en ce que** la vanne (60; 64) est pilotée en fonction d'au moins un paramètre choisi parmi :
- des paramètres thermiques tels que la température du carburant relevée de préférence en amont ou en aval des moyens de filtration (42), la température du fluide réfrigérant, la température extérieure au véhicule, et
- des paramètres caractérisant le fonctionnement du moteur (12) tels que le régime du moteur, la charge du moteur, la pression du carburant dans une rampe d'injection (16) disposée en aval de la sortie de module (41).

7. Module selon les revendications 5 et 6 prises ensemble, **caractérisé en ce que** la vanne de carburant (64) est pilotée en fonction d'au moins un paramètre choisi parmi des paramètres thermiques comprenant également la température du carburant relevée en amont de la vanne de carburant (64).

8. Module selon l'une quelconque des revendications précédentes, **caractérisé en ce que** l'entrée de module froide (38) et la sortie de carburant (56) de l'échangeur thermique (48) sont raccordées à une même entrée de carburant (44) des moyens de filtration (42).

9. Module selon l'une quelconque des revendications précédentes, **caractérisé en ce qu'**il forme un ensemble pré-assemblé destiné à être monté dans un dispositif (10) d'alimentation en carburant d'un moteur thermique (12) de véhicule automobile.

10. Dispositif d'alimentation en carburant d'un moteur thermique (12) de véhicule automobile du type à injection de carburant, ce dispositif comprenant :
- un réservoir (14) de carburant,
- une rampe (16) d'injection de carburant,
- un pompe (20) d'alimentation de carburant refoulant le carburant vers la rampe d'injection (16), et
- des moyens formant collecteur (22) de retour de carburant provenant de la pompe (20) ou de la rampe d'injection (16),
**caractérisé en ce qu'**il comprend un module (36) selon l'une quelconque des revendications 1 à 9, le réservoir (14) étant raccordé à l'entrée de module froide (38), les moyens formant collecteur (22) de retour de carburant étant raccordés à l'entrée de module chaude (40) et la sortie de module (41) étant raccordée à l'aspiration de la pompe (20).

11. Dispositif selon la revendication 10, **caractérisé en ce que** le moteur (12) est de type Diesel.
